(19)

Europäisches
Patentamt
European
Patent Office
Office européen
des brevets

(11) **EP 4 675 915 A1**

(12) **EUROPEAN PATENT APPLICATION**

(43) Date of publication:
**07.01.2026 Bulletin 2026/02**

(21) Application number: **24306111.6**

(22) Date of filing: **04.07.2024**

(51) International Patent Classification (IPC):
*H02P 29/024* (2016.01)

(52) Cooperative Patent Classification (CPC):
**H02P 29/024;** H02P 2207/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Mitsubishi Electric R & D Centre Europe B.V.
1119 NS Schiphol Rijk (NL)**
Designated Contracting States:
**FR**

• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventor: **VOYER, Nicolas
35708 RENNES Cedex 7 (FR)**

(74) Representative: **Cabinet Le Guen Maillet
3, impasse de la Vigie
CS 71840
35418 Saint-Malo Cedex (FR)**

(54) **A METHOD AND A DEVICE FOR DETERMINING STATIC AND DYNAMIC ECCENTRICITIES OF AN ELECTRIC MOTOR**

(57) The invention concerns a device and a method for determining static and dynamic eccentricities of and electric motor. The invention:
- obtains voltage and current waveforms of the electric motor;
- obtains a waveform representative of an apparent resistance of the motor from the obtained voltage and current waveforms;
- determines an average value ($R_{DC}$) and an oscillating component value ($\Delta R_{fr}$) of the apparent resistance of the motor from the obtained waveform representative of the apparent resistance of the motor;
- determines a reference apparent resistance value ($R_o$) expected in absence of eccentricity;
- determines static and dynamic eccentricities from the determined average value and the determined oscillating component value of the apparent resistance of the motor and from the determined reference apparent resistance of the motor.

Fig. 4

EP 4 675 915 A1

**Description**

TECHNICAL FIELD

The present invention relates generally to a method and a device for determining static and dynamic eccentricities of an electric motor.

RELATED ART

Static eccentricity occurs when symmetry axis of stator and of rotor are not aligned. Dynamic eccentricity occurs when the rotational axis differs from the rotor symmetry axis. When both static and dynamic eccentricities are present, the apparent airgap between stator and rotor varies in time, producing fluctuations of torque, causing vibrations.

Vibrations are cause of noise and fatigue, that can potentially lead to break of mechanical parts.

Optical micrometers can detect the movement of the motor shaft with high precision in order to determine the evolution of eccentricity with good accuracy but are bulky and must be installed on areas safe of vibrations.

Accelerometers and/or acoustic sensors can detect the level of vibrations, though disconnected from the eccentricity level, and still come at additional equipment cost to the industrial application.

Detecting trace of fault with Motor Current Signal Analysis (MCSA), relies on the presence in motor current signal of fault signature signal which is representative of the level of eccentricity fault.

As example, such fault signal can be detected from motor current waveforms, using time-frequency analysis (STFT, SFFT) or heterodyne demodulation at desired fault frequency. In presence of fault, a fault signal can be detected at specific frequency representative of nature of fault.

As the level of fault signal results from the presence of a mix of static and dynamic eccentricities, it is difficult to decide if the cause of the detected fault primarily results from misalignment of stator and rotor (static eccentricity) or if the rotor is no longer aligned with the rotational axis (dynamic eccentricity).

In addition, the level detected with MCSA is not clearly related to the level of vibration and noise. It is therefore difficult to set decision threshold on the observed level of harmonic for the purpose of maintenance action.

Furthermore, the level of detected fault signal is heavily impacted by the nature of the control applied to the motor. As example, closed loop current controller which aims at producing perfect current sinewaves, will naturally reduce the level of harmonic produced by eccentricity in comparison with what would otherwise be produced by open-loop controllers.

SUMMARY OF THE INVENTION

The present invention aims to get a clear estimation of static and dynamic eccentricity levels from analysis of electrical waveforms that is equally valid for any controller structure.

To that end, the present invention concerns a method for determining static and dynamic eccentricities of an electric motor, characterized in that the method comprises the steps of:

- obtaining voltage and current waveforms of the electric motor;
- obtaining a waveform representative of an apparent resistance of the motor from the obtained voltage and current waveforms;
- determining an average value ($R_{DC}$) and an oscillating component value ($\Delta R_{fr}$) of the apparent resistance of the motor from the obtained waveform representative of the resistance of the motor;
- determining a reference apparent resistance value ($R_o$) expected in absence of eccentricity;
- determining static and dynamic eccentricities from the determined average value and the determined oscillating component value of the apparent resistance of the motor and from the determined reference apparent resistance of the motor.

The present invention concerns also a device for determining static and dynamic eccentricities of an electric motor, characterized in that the method comprises the steps of:

- means for obtaining voltage and current waveforms of the electric motor;
- means for obtaining a waveform representative of an apparent resistance of the motor from the obtained voltage and current waveforms;
- means for determining an average value ($R_{DC}$) and an oscillating component value ($\Delta R_{fr}$) of the resistance of the motor from the obtained waveform representative of the apparent resistance of the motor;
- means for determining a reference apparent resistance value ($R_o$) expected in absence of eccentricity;
- means for determining static and dynamic eccentricities from the determined average value and the determined oscillating component value of the apparent resistance of the motor and from the determined reference apparent resistance of the motor.

Thus, as the apparent resistance waveform reflects variation of airgap, the present invention enables a clear estimation of static and dynamic eccentricity levels from an analysis of electrical waveforms that is equally valid for any controller structure. As the apparent resistance of the motor varies with the speed and the torque applied to the motor, this variation is compensated by the determination of the reference apparent resistance for that torque and speed. The difference between estimated apparent resistance for that torque and reference apparent resistance only carries time variations of the resistance that results from the eccentricity levels. The static eccentricity is revealed in the difference between average apparent resistance and reference apparent resistance at the same torque and speed condition, while the variations of apparent resistance with rotor position reveals the dynamic eccentricity, that causes the fluctuation of inductance with rotor position.

According to a particular feature, the voltage waveform is representative of a voltage reference and the current waveform is obtained in a dq framework rotating at stator frequency.

Thus, the voltage and current waveforms are available in motor controller that operates in dq framework. The voltage and current waveforms are represented as 2D vectors in Fresnel representation, from which can get determined the apparent resistance of the motor.

According to a particular feature, the resistance waveform is estimated as:

$$\hat{R}_{dq} = \frac{(|V_d^* I_d + V_q^* I_q|)}{I_d^2 + I_q^2},$$

where $V_d^*$ is the voltage in d axis, $I_d^*$ is the current in d axis, $V_q^*$ is the voltage in q axis, $I_q^*$ is the current in q axis.

Thus, the waveform of the apparent resistance is easily determined from current and voltage waveforms in any situation.

According to a particular feature, the voltage waveform is representative of a voltage reference and the current waveform is representative of polyphase current signals, where the polyphase current signals are transformed in an αβ framework with Concordia transformation and the apparent resistance waveform is estimated as:

$$R_{\alpha\beta} = \frac{|V_\alpha I_\alpha + V_\beta I_\beta|}{I_\alpha^2 + I_\beta^2}$$

where $V_\alpha$ is the voltage in $\alpha$ axis, $I_\alpha$ is the current in $\alpha$ axis, $V_\beta$ is the voltage in $\beta$ axis, $I_\beta$ is the current in $\beta$ axis and where the Concordia transformation is defined as:

$$\hat{X}_{\alpha\beta} = \sqrt{2/3} \begin{bmatrix} 1 & -1/2 & -1/2 \\ 0 & \sqrt{3}/2 & -\sqrt{3}/2 \end{bmatrix} \hat{X}_{abc}.$$

Thus, the polyphase vectors of current and voltage can be represented as 2D vectors, from which apparent resistance is easily determined using e.g. the line voltage and current of each phase of the electrical motor.

According to a particular feature, the voltage waveform is representative of a voltage reference of a single phase and the current waveform is the current flowing through the single phase of the electrical motor.

Thus, the method can get implemented using a single current probe, reducing the number of probes needed to implement the invention.

According to a particular feature, the single phase voltage and current signals are demodulated in phase and in quadrature at a frequency $f_s$ to get low frequency amplitudes $V_C$, $V_S$ and $I_C$, $I_S$ and the apparent resistance is determined as:

$$\hat{R}_a = \frac{|V_C I_C + V_S I_S|}{I_C^2 + I_S^2}$$

Thus, one 2D representation of voltage and current waveforms can be obtained from the current and voltage of the single phase.

According to a particular feature, the average apparent resistance is estimated using a low pass filter (LPF) and the oscillating component value of estimated apparent resistance oscillating at rotor frequency with respect to rotor position $\theta(t)$ is obtained by an incoherent heterodyne demodulation at motor rotation angular speed $\Omega_R = d\theta/dt$.

Thus, the variation of the apparent resistance with respect to rotor position can be estimated, reflecting changes in air gap resulting from dynamic eccentricity. This observed variation is not polluted by other (e.g. faster) variations resulting from rotor slot harmonic or from measurement noise.

Furthermore, a precise position of the rotor position is not strictly required. Heterodyne demodulation identifies the desired component oscillating at rotor frequency and rejects the components oscillating at other frequencies that do not result from the presence of eccentricities. The low pass filter identifies the average value of apparent resistance resulting from the presence of static eccentricity, without interference from oscillating components.

According to a particular feature, if the rotor position $\hat{\theta}(t)$ is available, a coherent demodulation is applied so that

$$\widehat{\Delta R_{fr}} = LPF\big(R(t)cos(\hat{\theta}(t))\big)$$ or if a rotor speed $\Omega_R$ is available, and incoherent demodulation is applied, and

$$\widehat{\Delta R_{fr}} = \sqrt{LPF(R(t)cos(\Omega_R t)^2 + LPF(R(t)sin(\Omega_R t)^2}$$ or if only stator speed $\Omega_s$ is available, and

incoherent demodulation is applied, $$\widehat{\Delta R_{fr}} = \sqrt{LPF(R(t)cos(\Omega_S t/P)^2 + LPF(R(t)sin(\Omega_S t/P)^2}$$ , where P is the number of pole pairs of the motor.

Thus, the level $\Delta R_{fr}$ of component oscillating at rotor frequency can be determined with any kind of input, using rotor position, rotor frequency or stator frequency, limiting the constraints on the available signal for the implementation of the method. In particular, the stator speed is at least available in any speed drives. In this latter case, the low-pass filter should be dimensioned large enough to accommodate the maximum frequency slip between stator and rotor.

According to a particular feature, the reference apparent resistance value $R_0$ expected in absence of eccentricity is determined as:

$$R_0 = R_s + R_r \frac{\omega_s(\omega_s - \omega_r)L_{mo}^2}{R_r^2 + (\omega_s - \omega_r)^2 L_r^2}$$

where $L_s$, $L_r$, $L_{mo}$ are stator, rotor and mutual inductances of the motor, $R_s$, $R_r$ are stator and rotor resistances, $\omega_s$ and $\omega_r$ are electrical speeds of stator and rotor signals or the apparent reference resistance $R_0$ is identified as

$$R_o = R_s + R_r \frac{L_{mo}^2}{L_r^2}\left(1 + \frac{1}{1+\gamma^2}\left(\frac{\omega_r - \gamma R_r/L_r}{(\omega_s - \omega_r)}\right)\right)$$

where $L_s$, $L_r$, $L_{mo}$ are stator, rotor and mutual inductances of the motor, $R_s$, $R_r$ are stator and rotor resistances, $\omega_s$ and $\omega_r$ are electrical speeds of stator and rotor signals.

The coefficient $\gamma = \frac{1}{(\omega_s - \omega_r)}\left(\frac{R_r}{L_r} - \frac{dlog(\omega_s - \omega_r)}{dt}\right)$ contains a derivative term of difference between stator and rotor electrical frequencies.

Thus, the variation of the apparent resistance of an induction motor is formulated to accommodate for changes in apparent resistance as function of speed and torque. In steady state, the formulation provides an accurate estimate of resistance variation in absence of eccentricity fault.

Thus, the second formulation improves the accuracy of the apparent resistance also in transient state conditions, where speed is subject to changes, as in motor acceleration or deceleration phase.

According to a particular feature, the reference apparent resistance value in absence of eccentricity is determined with an Artificial Intelligence method that takes torque, stator speed and acceleration as inputs.

Thus, an accurate estimation law of variations of apparent resistance in absence of fault can get determined on a large range of operation conditions, without inaccuracies resulting from the usage of simplified formulation. The Artificial Intelligence method is trained on initial waveform at various speed and torque conditions.

According to a particular feature, static $\delta_{SE}$ and dynamic eccentricities $\delta_{SE}$ are determined as:

$$\begin{cases} \delta_{SE} \cong \dfrac{\Delta R_{DC}}{\omega_s(\omega_s - \omega_r)} \dfrac{R_r}{2L_{mo}^2} (1 + (\omega_s - \omega_r)^2 L_r^2/R_r^2) \\ \delta_{DE} \cong \dfrac{\Delta R_{fr}}{\omega_s(\omega_s - \omega_r)} \dfrac{R_r}{2L_{mo}^2} (1 + (\omega_s - \omega_r)^2 L_r^2/R_r^2) \end{cases}$$

or if, $L_{m0}$, $R_r$ are known and $R_r \gg |\omega_s - \omega_r|L_r$ as

$$\begin{cases} \delta_{SE} \cong \dfrac{\Delta R_{DC}}{\omega_s(\omega_s - \omega_r)} \dfrac{R_r}{2L_{mo}^2} \\ \delta_{DE} \cong \dfrac{\Delta R_{fr}}{\omega_s(\omega_s - \omega_r)} \dfrac{R_r}{2L_{mo}^2} \end{cases}$$

or as :

$$\begin{cases} \delta_{SE} \propto \dfrac{\Delta R_{DC}}{\omega_s(\omega_s - \omega_r)} \\ \delta_{DE} \propto \dfrac{\Delta R_{fr}}{\omega_s(\omega_s - \omega_r)} \end{cases}$$

where $\Delta R_{DC} = R_{DC} - R_o$

Thus, the static and dynamic eccentricities can get individually identified from measured variations of apparent resistance. A change in average apparent resistance $\Delta R_{DC}$ reflects the presence of static eccentricity. A change in level $\Delta R_{fr}$ of component oscillating at rotor frequency reveals the presence of dynamic eccentricity.

BRIEF DESCRIPTION OF THE DRAWINGS

The characteristics of the invention will emerge more clearly from a reading of the following description of example embodiments, the said description being produced with reference to the accompanying drawings, among which:

Fig. 1 represents an example of a view of an electric motor with static and dynamic eccentricities;
Fig. 2 represents an example of a system for controlling a motor in which a device for determining static and dynamic eccentricities of an electric motor is implemented;
Fig. 3 represents an architecture of a controller that is able to determine static and dynamic eccentricities of an electric motor according to the invention;
Fig. 4 represents an example of an algorithm for determining static and dynamic eccentricities of an electric motor according to the invention.

DESCRIPTION

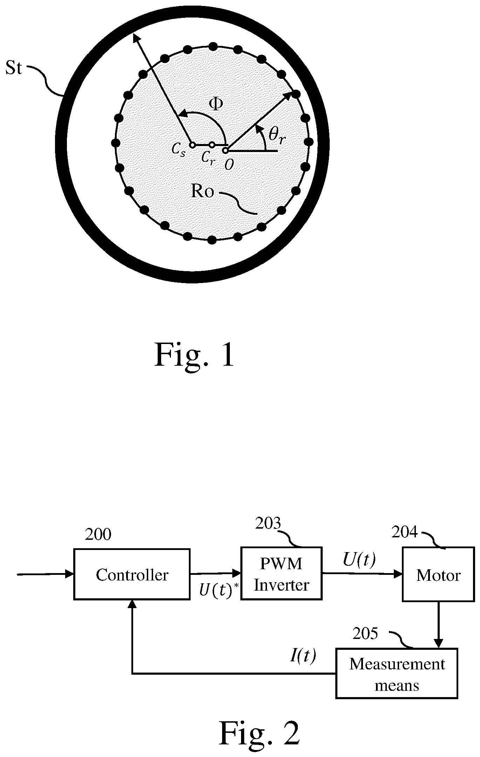

**Fig. 1** represents an example of a view of an electric motor with static and dynamic eccentricities.
In Fig. 1, a rotor Ro and a stator St are shown. As shown in Fig. 1, an eccentricity is present. The air gap between the rotor Ro and the stator is not constant. The air gap seen from a stator conductor positioned at stator direction $\phi$ can be expressed as a function of rotor position $\theta_r$, stator direction $\phi$, nominal airgap $g_0$ and eccentricity ratios $\delta_{SE}$ and $\delta_{DE}$ as :

$$g(\phi, \theta_r) = g_0(K_c + \delta_{SE}\cos(\phi) + \delta_{DE}\cos(\phi - \theta_r))$$

where Kc is the carter coefficient of the motor. Points $C_s$ and $C_r$ represent the symmetry axis of stator and of rotor respectively, and point O represents the rotation axis of rotor. The static eccentricity is caused by misalignment of symmetry axis rotor and stator (Point $C_r$ and $C_s$). The dynamic eccentricity is caused by misalignment of symmetry axis and rotation axis of rotor (points $C_r$ and O). In the latter case, the position of Point $C_r$ varies with rotor position, causing vibration and exchanges of mechanical energies that can harm the motor.
**Fig. 2** represents an example of a system for controlling a motor in which a device for determining static and dynamic eccentricities of an electric motor is implemented.

The system comprises a controller 200 that controls a motor 204 through a pulse width modulation (PWM) inverter 203.

The controller 200 provides control signals V(t)* to the pulse width modulation inverter 203 that are representative of a desired voltage V(t) waveform.

The system further comprises measurement means 205 that provide samples of current *I(t)* of at least one phase of the motor to the controller 200. In a variant, the motor 204 is equipped with a position sensor, and measurement means 205 also provides the measured angular speed $\Omega_r$ of the motor 204 to the controller 200.

The controller determines the voltage signal $V(t)^*$ to reach a desired stator speed target $\omega_s$ according to state of art open-loop (e.g. V/f control) or closed loop control (e.g. Field Oriented Current vector control) methods.

According to the invention, the controller 200 is able to determine dynamic and static eccentricities of the motor 204.

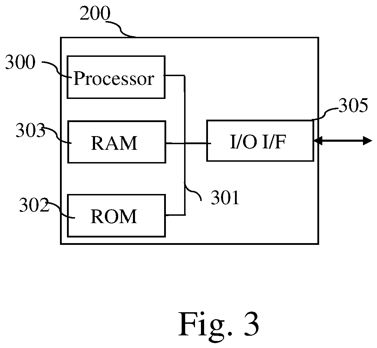

**Fig. 3** represents an architecture of the controller that is able to determine static and dynamic eccentricities of an electric motor according to the invention.

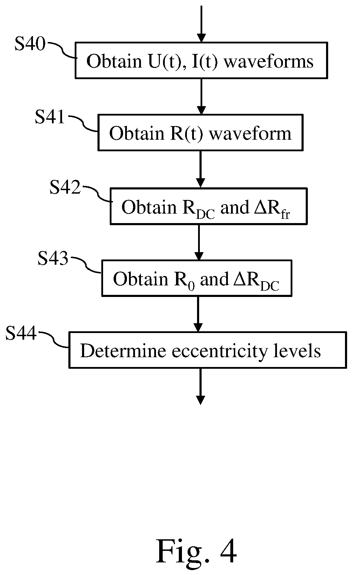

The controller 200 has, for example, an architecture based on components connected by a bus 301 and a processor 300 controlled by a program as disclosed in Fig. 4.

The bus 301 links the processor 300 to a read only memory ROM 302, a random-access memory RAM 303 and an input output I/O IF interface 305.

The input output I/O IF interface 305 enables the processor 300 to transfer control signals to the pulse width modulated inverter 203 and to receive measured current I(t) flowing through the motor 204.

The memory 303 contains registers intended to receive variables and the instructions of the program related to the algorithm as disclosed in Fig. 4.

The read-only memory, or possibly a Flash memory 302, contains instructions of the programs related to the algorithm as disclosed in Fig. 4, that are, when the controller 200 is powered on, loaded to the random-access memory 303. Alternatively, the program may also be executed directly from the ROM memory 302.

The calculation performed by the controller 200 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the controller 200 includes circuitry, or a device including circuitry, causing the controller 200 to perform the program related to the algorithm as disclosed in Fig. 4.

**Fig. 4** represents an example of an algorithm for determining static and dynamic eccentricities of an electrical motor according to the invention.

At step S40, the controller 200 obtains the current waveform I(t) flowing through the motor 204. The voltage waveform V(t) effectively applied to the motor by the PWM inverter 203 may be measured or derived from the signal V(t)*.

In a first variant, voltage and current waveforms are representative of a voltage reference and of measured current levels ( $V_{dq}^*$ , $I_{dq}$) in a dq framework rotating at stator frequency. In such case, the controller 200 comprises a dq transform module.

In a second variant, voltage and current waveforms are as example representative of voltage reference and measured current levels of polyphase signals ($V_{abc}$, $I_{abc}$).

In a third variant, voltage and current waveforms are as example representative of voltage reference and measured current level of a single phase ($V_a$, $I_a$).

At step S41, the controller 200 determines the apparent resistance of the motor 204 from the current I(t) flowing through the motor 204 and the voltage V(t) applied to the motor.

In the first variant, the voltage and current waveforms are available in ($I_d$, $I_q$) and ( $V_d^*$, $V_q^*$ ), The apparent resistance waveform is as example determined as:

$$\hat{R}_{dq} = \frac{(|V_d^* I_d + V_q^* I_q|)}{I_d^2 + I_q^2}$$

In the second variant, the controller 200 transforms the 3-phase waveforms in $\alpha\beta$ framework with a Concordia transformation.

The Concordia transformation is defined as :

$$\hat{X}_{\alpha\beta} = \sqrt{2/3} \begin{bmatrix} 1 & -1/2 & -1/2 \\ 0 & \sqrt{3}/2 & -\sqrt{3}/2 \end{bmatrix} \hat{X}_{abc}$$

where $\hat{X}_{abc}$ is the vector to be transformed.

And the apparent resistance is as example determined as $R_{\alpha\beta} = \frac{|V_\alpha I_\alpha + V_\beta I_\beta|}{I_\alpha^2 + I_\beta^2}$

In the third variant, the resistance waveform is estimated from single phase signals ($V_a$, $I_a$), which are I&Q demodulated at a frequency $f_s$ to get low frequency amplitudes $V_C$, $V_S$ and $I_C$, $I_S$, and the apparent resistance is as exampled determined as

$$\hat{R}_a = \frac{|V_C I_C + V_S I_S|}{I_C^2 + I_S^2}$$

Heterodyne demodulation comprises oscillators, mixers and low pass filters. It should be noted that the bandwidth of the low pass filters should be large enough to keep the rotor rotational frequency, and steep enough to get rid of second harmonic brought by heterodyne demodulation.

In a particular mode of realization, the signal is angular resampled, so that the low pass filter is implemented with constant IIR coefficient for any speed.

In a particular implementation of the second and third variants, the voltage vector is rotated by angle $2\pi\Delta T f_s$ function of the controller 200 delay $\Delta T$ and of the stator frequency $f_S$, to compensate for the timing difference between effectiveness of voltage reference and measurement of associated current vector.

Other estimation techniques of apparent resistance are possible, as long as it keeps instantaneous variation of apparent resistance with position.

At step S42, the controller 200 determines an average value $R_{DC}$ of the apparent resistance and an oscillating component value $\Delta R_{fr}$ of the apparent resistance.

The average value, and oscillating resistance are identified from estimated resistance within at least one period of rotor frequency.

In a first implementation, apparent resistance level oscillating at rotor frequency is identified as $\Delta R_{fr} = \frac{R_{max} - R_{min}}{2}$, where $R_{max}$ and $R_{min}$ are the minimal and maximal values of estimated apparent resistance. The apparent resistance is supposed to superpose constant $R_{DC}$ level and variation level $\Delta R$ with respect to rotor position $\theta$ ($t$), plus additional variation levels at other frequencies.

$$R(t) = R_{DC} + \Delta R_{fr} cos(\theta(t)) + n_R(t)$$

Where $n_L(t)$ is the sum of variation levels oscillating at frequencies distinct from DC and from the rotor frequency and includes measurement plus computation noise.

The average resistance level $R_{DC}$ is estimated as $\widehat{R_{DC}} = LPF(R(t))$.

In a second mode of realization, the variation level $\Delta R_{fr}$ with respect to rotor position $\theta(t)$ is obtained by heterodyne demodulation at mechanical frequency $\Omega_R = d\theta/dt$.

If the rotor position $\hat{\theta}(t)$ is available, a coherent demodulation is applied so that

$$\widehat{\Delta R_{fr}} = LPF\left(R(t)cos(\hat{\theta}(t))\right)$$

If a rotor speed $\Omega_R$ is available, and incoherent demodulation is applied, and

$$\widehat{\Delta R_{fr}} = \sqrt{LPF(R(t)cos(\Omega_R t)^2 + LPF(R(t)sin(\Omega_R t)^2}$$

If only stator speed $\Omega_S$ is available, and incoherent demodulation is applied,

$$\widehat{\Delta R_{fr}} = \sqrt{LPF(R(t)cos(\Omega_S t/P)^2 + LPF(R(t)sin(\Omega_S t/P)^2}$$, where $P$ is the number of pole pairs of the motor.

At step S43, the controller 200 estimates a reference apparent resistance value $R_0$ expected in absence of eccentricity.

The reference apparent resistance $R_0$ expected in absence of eccentricity is identified for an induction machine (IM) as

$$R_0 = R_s + R_r \frac{\omega_s(\omega_s - \omega_r)L_{mo}^2}{R_r^2 + (\omega_s - \omega_r)^2 L_r^2}$$

Where $L_s$, $L_r$, $L_{mo}$ are stator, rotor and mutual inductances of the motor, $R_s$, $R_r$ are stator and rotor resistances, $\omega_s$ and $\omega_r$ are electrical speeds of stator and rotor waveforms.

The angular speed of rotor electric signal $\omega_r$ is determined from the rotor speed $\Omega_r$ and the number of pole pairs $P$: $\omega_r = P\Omega_r$. As example, speed $\Omega_r$ is acquired at step S40 from the measurement means 205.

As another example, rotor speed $\Omega_r$ is estimated by processor 200 using a sensorless observer, or determined from the applied torque level.

As yet another example, $\Omega_r$ is estimated using a PLL on the apparent resistance demodulated at step S42.

For example, $R_0$ is identified for an induction machine (IM) as

$$R_o = R_s + R_r \frac{L_{mo}^2}{L_r^2} \left( 1 + \frac{1}{1 + \gamma^2} \left( \frac{\omega_r - \gamma R_r/L_r}{(\omega_s - \omega_r)} \right) \right)$$

Where $L_s$, $L_r$, $L_{mo}$ are stator, rotor and mutual inductances of the motor, $R_s$, $R_r$ are stator and rotor resistances, $\omega_s$ and $\omega_r$ are electrical speeds of stator and rotor waveforms. The coefficient $\gamma = \frac{1}{(\omega_s - \omega_r)} \left( \frac{R_r}{L_r} - \frac{dlog(\omega_s - \omega_r)}{dt} \right)$ contains a derivative term of difference between stator and rotor electrical frequencies.

For example, $\omega_r$ is estimated using a PLL on estimated apparent resistance.

For example, reference apparent resistance $R_0$ expected in absence of eccentricity is identified with an Artificial Intelligence (AI) method that takes torque, stator speed and acceleration as inputs. The artificial intelligence method is trained on the healthy motor to replicate observed $R_{DC}$ resistance in a variety of torque, speed and acceleration situations. The AI method replicates the variations of apparent resistances in all situations, with impact of any physics at work such as iron losses not modelled in the other examples. As example, the AI method consists in a convolutional neural network (CNN) and is implemented in software or in hardware.

At step S44, the controller 200 estimates static and dynamic eccentricities from the observed variations of the apparent resistance.

According to the invention, the mutual inductance $L_m$ varies according to eccentricities $\delta_{SE}$ and $\delta_{DE}$ according to $L_m = L_{m0} \cdot (1 + \delta_{SE} + \delta_{DE} \cos(\theta_R))$. Considering $\delta_{DE} \ll 1$, $\delta_{SE} \ll 1$, we get $\Delta L_m^2 \cong \Delta L_{mo}^2 (1 + 2\delta_{SE} + 2\delta_{DE} \cos(\theta_R))$. From the earlier formulation of apparent resistance, this means:

$$\Delta R_{DC} = R_{DC} - R_o \cong \frac{R_r \omega_s(\omega_s - \omega_r)}{R_r^2 + (\omega_s - \omega_r)^2 L_r^2} \Delta L_{mo}^2 (1 + 2\delta_{SE})$$

$$\Delta R_{fr} \cong \frac{R_r \omega_s(\omega_s - \omega_r)}{R_r^2 + (\omega_s - \omega_r)^2 L_r^2} \Delta L_{mo}^2 \, 2\delta_{DE}$$

In a variant, $L_{m0}$, $R_r$ and $L_r$ are known (e.g. from FEA (Finite Element Analysis) or from nameplate data of the motor). Then eccentricities are resolved as

$$\begin{cases} \delta_{SE} \cong \dfrac{\Delta R_{DC}}{\omega_s(\omega_s - \omega_r)} \dfrac{R_r}{2L_{mo}^2} (1 + (\omega_s - \omega_r)^2 L_r^2/R_r^2) \\[2ex] \delta_{DE} \cong \dfrac{\Delta R_{fr}}{\omega_s(\omega_s - \omega_r)} \dfrac{R_r}{2L_{mo}^2} (1 + (\omega_s - \omega_r)^2 L_r^2/R_r^2) \end{cases}$$

In a second variant, $L_{m0}$, $R_r$ are known and $R_r >> |\omega_s - \omega_r|L_r$. Eccentricities are identified from

$$\begin{cases} \delta_{SE} \cong \dfrac{\Delta R_{DC}}{\omega_s(\omega_s - \omega_r)} \dfrac{R_r}{2L_{mo}^2} \\ \delta_{DE} \cong \dfrac{\Delta R_{fr}}{\omega_s(\omega_s - \omega_r)} \dfrac{R_r}{2L_{mo}^2} \end{cases}$$

In a third variant, eccentricity levels are identified from its variations according to following laws :

$$\begin{cases} \delta_{SE} \propto \dfrac{\Delta R_{DC}}{\omega_s(\omega_s - \omega_r)} \\ \delta_{DE} \propto \dfrac{\Delta R_{fr}}{\omega_s(\omega_s - \omega_r)} \end{cases}$$

where $\Delta R_{DC} = R_{DC} - R_o$

## Claims

1. A method for determining static and dynamic eccentricities of an electric motor, **characterized in that** the method comprises the steps of:

   - obtaining voltage and current waveforms of the electric motor;
   - obtaining a waveform representative of an apparent resistance of the motor from the obtained voltage and current waveforms;
   - determining an average value ($R_{DC}$) and an oscillating component value ($\Delta R_{fr}$) of the apparent resistance of the motor from the obtained waveform representative of the apparent resistance of the motor;
   - determining a reference apparent resistance value ($R_o$) in absence of eccentricity;
   - determining static and dynamic eccentricities from the determined average value and the determined oscillating component value of the apparent resistance of the motor and from the determined reference apparent resistance of the motor.

2. The method according to claim 1, **characterized in that** the voltage waveform is representative of a voltage reference and the current waveform is obtained in a dq framework rotating at stator frequency.

3. The method according to claim 2, **characterized in that** the apparent resistance waveform is estimated as:

$$\hat{R}_{dq} = \frac{(|V_d^* I_d + V_q^* I_q|)}{I_d^2 + I_q^2},$$

where $V_d^*$ is the voltage in d axis, $I_d^*$ is the current in d axis, $V_q^*$ is the voltage in q axis, $I_q^*$ is the current in q axis.

4. The method according to claim 1, **characterized in that** the voltage waveform is representative of a voltage reference and the current waveform is representative of polyphase current signals, where the polyphase current signals are transformed in an $\alpha\beta$ framework with Concordia transformation and the apparent resistance waveform is estimated as:

$$R_{\alpha\beta} = \frac{|V_\alpha I_\alpha + V_\beta I_\beta|}{I_\alpha^2 + I_\beta^2},$$

where $V_\alpha$ is the voltage in $\alpha$ axis, $I_\alpha$ is the current in $\alpha$ axis, $V_\beta$ is the voltage in $\beta$ axis, $I_\beta$ is the current in $\beta$ axis and where the Concordia transformation is defined as:

$$\hat{X}_{\alpha\beta} = \sqrt{2/3}\begin{bmatrix} 1 & -1/2 & -1/2 \\ 0 & \sqrt{3}/2 & -\sqrt{3}/2 \end{bmatrix}\hat{X}_{abc}.$$

5. The method according to claim 1, **characterized in that** the voltage waveform is representative of a voltage reference of a single phase and the current waveform is the current flowing through the single phase of the electrical motor.

6. The method according to claim 5, **characterized in that** the single phase voltage and current signals are demodulated in phase and in quadrature at a frequency $f_s$ to get low frequency amplitudes $V_C$, $V_S$ and $I_C$, $I_S$ and the apparent resistance is determined as:

$$\hat{R}_a = \frac{|V_C I_C + V_S I_S|}{I_C^2 + I_S^2}.$$

7. The method according to any of the claims 1 to 6, **characterized in that** the average apparent resistance $R_{DC}$ is estimated using a low pass filter (LPF) and the oscillating component value $\Delta R_{fr}$ of estimated apparent resistance oscillating at rotor frequency with respect to rotor position $\theta(t)$ is obtained by an incoherent heterodyne demodulation at motor rotation angular speed $\Omega_R = d\theta/dt$.

8. The method according to claim 7, **characterized in that** if the rotor position $\hat{\theta}(t)$ is available, a coherent demodulation is applied so that $\widehat{\Delta R_{fr}} = LPF(R(t)cos(\hat{\theta}(t)))$ or if a rotor speed $\Omega_R$ is available, and incoherent demodulation is applied, and $\widehat{\Delta R_{fr}} = \sqrt{LPF(R(t)cos(\Omega_R t)^2 + LPF(R(t)sin(\Omega_R t)^2}$ or if only stator speed $\Omega_s$ is available, and incoherent demodulation is applied, $\widehat{\Delta R_{fr}} = \sqrt{LPF(R(t)cos(\Omega_S t/P)^2 + LPF(R(t)sin(\Omega_S t/P)^2}$, where P is the number of pole pairs of the motor.

9. The method according to any of the claims 1 to 8, **characterized in that** the reference apparent resistance value $R_0$ expected in absence of eccentricity is determined for an induction motor as:

$$R_0 = R_s + R_r \frac{\omega_s(\omega_s - \omega_r)L_{mo}^2}{R_r^2 + (\omega_s - \omega_r)^2 L_r^2}$$

where $L_s$, $L_r$, $L_{mo}$ are stator, rotor and mutual inductances of the motor, $R_s$, $R_r$ are stator and rotor resistances, $\omega_s$ and $\omega_r$ are electrical speeds of stator and rotor signals or the reference apparent resistance $R_0$ is identified as

$$R_o = R_s + R_r \frac{L_{mo}^2}{L_r^2}\left(1 + \frac{1}{1+\gamma^2}\left(\frac{\omega_r - \gamma R_r/L_r}{(\omega_s - \omega_r)}\right)\right)$$

where $L_s$, $L_r$, $L_{mo}$ are stator, rotor and mutual inductances of the motor, $R_s$, $R_r$ are stator and rotor resistances, $\omega_s$ and $\omega_r$ are electrical speeds of stator and rotor signals. The coefficient $\gamma = \frac{1}{(\omega_s - \omega_r)}\left(\frac{R_r}{L_r} - \frac{dlog(\omega_s - \omega_r)}{dt}\right)$ contains a derivative term of difference between stator and rotor electrical frequencies.

10. The method according to any of the claims 1 to 9, **characterized in that**, the reference apparent resistance value in absence of eccentricity is determined with an Artificial Intelligence method that takes torque, stator speed and acceleration as inputs.

11. The method according to any of the claims 1 to 10, **characterized in that** static $\delta_{SE}$ and dynamic eccentricities $\delta_{SE}$ are determined as:

$$\begin{cases} \delta_{SE} \cong \dfrac{\Delta R_{DC}}{\omega_s(\omega_s - \omega_r)} \dfrac{R_r}{2L_{mo}^2} (1 + (\omega_s - \omega_r)^2 L_r^2/R_r^2) \\ \delta_{DE} \cong \dfrac{\Delta R_{fr}}{\omega_s(\omega_s - \omega_r)} \dfrac{R_r}{2L_{mo}^2} (1 + (\omega_s - \omega_r)^2 L_r^2/R_r^2) \end{cases}$$

or if, $L_{m0}$, $R_r$ are known and $R_r \gg |\omega_s - \omega_r|L_r$ as

$$\begin{cases} \delta_{SE} \cong \dfrac{\Delta R_{DC}}{\omega_s(\omega_s - \omega_r)} \dfrac{R_r}{2L_{mo}^2} \\ \delta_{DE} \cong \dfrac{\Delta R_{fr}}{\omega_s(\omega_s - \omega_r)} \dfrac{R_r}{2L_{mo}^2} \end{cases}$$

or as :

$$\begin{cases} \delta_{SE} \propto \dfrac{\Delta R_{DC}}{\omega_s(\omega_s - \omega_r)} \\ \delta_{DE} \propto \dfrac{\Delta R_{fr}}{\omega_s(\omega_s - \omega_r)} \end{cases}$$

where $\Delta R_{DC} = R_{DC} - R_o$.

12. A device for determining static and dynamic eccentricities of an electric motor, **characterized in that** the method comprises the steps of:

- means for obtaining voltage and current waveforms of the electric motor;
- means for obtaining a waveform representative of an apparent resistance of the motor from the obtained voltage and current waveforms;
- means for determining an average value ($R_{DC}$) and an oscillating component value ($\Delta R_{fr}$) of the apparent resistance of the motor from the obtained waveform representative of the apparent resistance of the motor;
- means for determining a reference apparent resistance value expected in absence of eccentricity;
- means for determining static and dynamic eccentricities from the determined average value and the determined oscillating component value of the apparent resistance of the motor and from the determined reference apparent resistance of the motor.

St

$\Phi$

$\theta_r$

$C_s$  $C_r$  $O$

Ro

## Fig. 1

200
Controller

$U(t)^*$

203
PWM Inverter

$U(t)$

204
Motor

205
Measurement means

$I(t)$

## Fig. 2

**Fig. 3**

S40 — Obtain U(t), I(t) waveforms

S41 — Obtain R(t) waveform

S42 — Obtain $R_{DC}$ and $\Delta R_{fr}$

S43 — Obtain $R_0$ and $\Delta R_{DC}$

S44 — Determine eccentricity levels

# Fig. 4

<table>
<tr><td>Europäisches<br>Patentamt<br>European<br>Patent Office<br>Office européen<br>des brevets</td><td align="center">**EUROPEAN SEARCH REPORT**</td><td>**Application Number**<br><br>EP 24 30 6111</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DOOSOO HYUN ET AL: "Automated monitoring of airgap eccentricity for inverterfed induction motors under standstill conditions", ENERGY CONVERSION CONGRESS AND EXPOSITION (ECCE), 2010 IEEE, IEEE, PISCATAWAY, NJ, USA, 12 September 2010 (2010-09-12), pages 2485-2492, XP031787162, ISBN: 978-1-4244-5286-6 | 1,12 | INV.<br>H02P29/024 |
| A | * page 2488, left-hand column, paragraph 2nd; figure 8 *<br>* equation 8;<br>page 2487, left-hand column - paragraph 2nd *<br>* page 2491, right-hand column - paragraph 1st * | 2-11 | |
| | ----- | | |
| X | Stavrou Andreas: "Andreas Stavrou Impedance vector monitoring strategy for on-line detection of eccentricity in induction motors", , 2 September 2006 (2006-09-02), pages 1-5, XP093229632, Retrieved from the Internet: URL:https://masters.donntu.ru/2009/eltf/sh evtsov/library/Source3.htm [retrieved on 2024] | 1,12 | TECHNICAL FIELDS SEARCHED (IPC)<br><br>H02P |
| A | * figures 4-6 * | 2-11 | |
| | ----- | | |
| X | US 2023/139907 A1 (SHAHID ALI [IN] ET AL) 4 May 2023 (2023-05-04) | 1,12 | |
| A | * paragraph [0003] *<br>* paragraph [0018] *<br>* paragraph [0023] * | 2-11 | |
| | -----<br><br>-/-- | | |

The present search report has been drawn up for all claims

| Place of search | Date of completion of the search | Examiner |
|---|---|---|
| Munich | 30 November 2024 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

Europäisches
Patentamt

European
Patent Office

Office européen
des brevets

**EUROPEAN SEARCH REPORT**

Application Number

EP 24 30 6111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | M'HAMED DRIF ET AL: "Discriminating rotor cage faults and mechanical load oscillations in three-phase induction motors by the stator instantaneous complex apparent impedance", ENERGY CONVERSION CONGRESS AND EXPOSITION (ECCE), 2012 IEEE, IEEE, 15 September 2012 (2012-09-15), pages 3024-3031, XP032467332, DOI: 10.1109/ECCE.2012.6342516 ISBN: 978-1-4673-0802-1 * the whole document * ----- | 1-12 | |
| A | ROGOZIN G G ET AL: "Induction motor eccentricity diagnosis using impedance spectrum and shaft voltage", ELECTRICAL MACHINES (ICEM), 2010 XIX INTERNATIONAL CONFERENCE ON, IEEE, PISCATAWAY, NJ, USA, 6 September 2010 (2010-09-06), pages 1-3, XP031779736, ISBN: 978-1-4244-4174-7 * the whole document * ----- | 1-12 | TECHNICAL FIELDS SEARCHED (IPC) |
| A | KR 101 841 577 B1 (UNIV KOREA RES & BUS FOUND [KR]) 4 May 2018 (2018-05-04) * the whole document * ----- | 1-12 | |

The present search report has been drawn up for all claims

| Place of search | Date of completion of the search | Examiner |
|---|---|---|
| Munich | 30 November 2024 | Fligl, Stanislav |

EPO FORM 1503 03.82 (P04C01)

## ANNEX TO THE EUROPEAN SEARCH REPORT
## ON EUROPEAN PATENT APPLICATION NO.

EP 24 30 6111

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2024

| Patent document cited in search report | | Publication date | Patent family member(s) | | Publication date |
|---|---|---|---|---|---|
| US 2023139907 A1 | | 04-05-2023 | CA | 3157014 A1 | 29-04-2023 |
| | | | CN | 116070074 A | 05-05-2023 |
| | | | EP | 4174503 A1 | 03-05-2023 |
| | | | US | 2023139907 A1 | 04-05-2023 |
| KR 101841577 B1 | | 04-05-2018 | NONE | | |

EPO FORM P0459

For more details about this annex : see Official Journal of the European Patent Office, No. 12/82